(19) Europäisches Patentamt
European Patent Office
Office européen des brevets

(11) EP 3 437 150 B1

(12) EUROPEAN PATENT SPECIFICATION

(45) Date of publication and mention
of the grant of the patent:
**25.12.2019 Bulletin 2019/52**

(51) Int Cl.:
**H01M 8/16** (2006.01)     **H01M 4/88** (2006.01)

(21) Application number: **17714469.8**

(22) Date of filing: **30.03.2017**

(86) International application number:
**PCT/EP2017/057606**

(87) International publication number:
**WO 2017/167917 (05.10.2017 Gazette 2017/40)**

(54) **BIOFUEL CELLS AND BIOREACTOR OF BIOCATALYTIC COMPLEX COMPRISING OF STERILIZED SOIL**

BIOBRENNSTOFFZELLEN UND BIOREAKTOR AUS EINEM BIOKATALYTISCHEN KOMPLEX AUS STERILISIERTEM BODEN

PILES À BIOCOMBUSTIBLE ET BIORÉACTEUR COMPOSÉ D'UN COMPLEXE BIOCATALYTIQUE COMPRENANT DU SOL STÉRILISÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **30.03.2016 EP 16162941**

(43) Date of publication of application:
**06.02.2019 Bulletin 2019/06**

(73) Proprietors:
• **Institut National de la Recherche Agronomique**
**75007 Paris (FR)**
• **INST. D'ENSEIGNEMENT SUPERIEUR ET DE RECHERCHE EN ALIMENTATION, SANTE ANIMALE, SCIENCES AGRONOMIQUES ET DE L'ENVIRONNEMENT (VET AGRO SUP)**
**69280 Marcy l'Etolie (FR)**
• **Institut National d'Etudes Superieures Agronomiques de Montpellier**
**34060 Montpellier (FR)**

(72) Inventors:
• **FONTAINE, Sébastien**
**63530 VOLVIC (FR)**
• **ALVAREZ, Gaël**
**63350 CULHAT (FR)**
• **DUBREUCQ, Eric**
**34000 MONTPELLIER (FR)**

(74) Representative: **Gevers & Orès**
**Immeuble le Palatin 2**
**3 Cours du Triangle**
**CS 80165**
**92939 Paris La Défense Cedex (FR)**

(56) References cited:
• **V. MAIRE ET AL: "An unknown oxidative metabolism substantially contributes to soil CO$_2$ emissions", BIOGEOSCIENCES, vol. 10, no. 2, 21 February 2013 (2013-02-21), pages 1155-1167, XP055283840, DOI: 10.5194/bg-10-1155-2013 cited in the application**
• **BLANKINSHIP JOSEPH C ET AL: "Separating cellular metabolism from exoenzyme activity in soil organic matter decomposition", SOIL BIOLOGY AND BIOCHEMISTRY, PERGAMON, OXFORD, GB, vol. 71, 21 January 2014 (2014-01-21), pages 68-75, XP028616620, ISSN: 0038-0717, DOI: 10.1016/J.SOILBIO.2014.01.010**
• **SINSABAUGH ROBERT L ET AL: "Scaling microbial biomass, metabolism and resource supply", BIOGEOCHEMISTRY, KLUWER ACADEMIC PUBLISHERS, AMSTERDAM, NL, vol. 122, no. 2, 16 December 2014 (2014-12-16), pages 175-190, XP035432155, ISSN: 0168-2563, DOI: 10.1007/S10533-014-0058-Z [retrieved on 2014-12-16]**

**Description**

The present invention consists of *in vitro* methods of reconstituting, manipulating and coupling multistep biochemical reactions or complete biochemical processes usually encountered in living cells using extracellular components of the intracellular metabolism (substrates, enzymes, co-factors) naturally present in soil matrix after sterilisation, such components of the intracellular metabolism may alternatively be added to said sterilized soil matrix.

This invention lies on the discovery that the soil matrix contains numerous extracellular bio- and chemical catalysts (enzymes, metals, minerals) able to mediate the multistep chemical reactions typically found in living cells; this phenomenon has been firstly described by Maire et al. (Biogeosciences, 10, 1155-1167, 2013) who highlighted a respiratory release of $CO_2$ from sterilized soils.

The article from Maire *et al.* raised several questions from the scientific community regarding the fact that the observed chemical reactions could only be mediated by extracellular soil components and if the tested soil was properly sterilized.

The Inventors pursue the works presented by Maire *et al.*; they confirmed those observations and also the occurrence of biochemical reactions mediated by extracellular catalytic components, they further demonstrated a high stabilisation of those extracellular catalytic components in the soil (maintenance of catalytic activities during >1600 days) (submitted manuscript).

Based on these additional results, the Inventors have developed biocatalytic complex composed of sterilized soil in which complex multistep biochemical reactions may be carried out; such biocatalytic complex can be used in bioreactors for:

1) The production of electricity due to the deep or complete oxidation of organic compounds in biofuel cell.
2) The production of organic components of interest through a metabolic engineering using soil catalysts and/or soil matrix to stabilize enzymes, an alternative to current approach based on genetically modified organisms. The considered products are fuels, foods and chemical compounds with added value. The invention can also be used to convert mineral compounds ($H_2O$, $CO_2$) and electricity into organic compounds which can further be used as source of energy in proposed biofuel cell or other systems. Therefore, this electrochemical conversion represents a mean to store energy.

Accordingly, the present invention relates to biofuel cell composed of:

- an anode comprising a biocatalytic complex composed of a sterilized soil and optionally an electrolyte, and a first conductive material partially entrapped into said sterilized soil; and
- a cathode comprising a second conductive material in the presence of $O_2$;

wherein soil matrix contains at least one of the two following properties:

- the presence of organic or mineral catalyzers including enzymes stabilized on soil particles (e.g. enzymes of Krebs cycle), metallic species (e.g. $Fe^{2+/3+}$), minerals (e.g. clay) or other organo-mineral catalyzers; and/or
- the presence of organic or mineral particles allowing the stabilization of at least two different catalyzers.

In such biofuel cell, the sterilized soil of the anode is able to convert chemical energy from organic compounds ($CO_2$ released by oxidation reduction) already present in or added to said soil into electricity.

There are different ways to define a soil: its origin, its composition, its physical and chemical properties, its agronomic qualities, etc.

In the context of the present invention, a soil is defined as a complex medium, essentially inorganic, porous, and comprising microbial-transformed organic matter.

The term "soil" thus refers to any natural soil or natural soil mixture, but also to any combination of components (such as sand, silt, clay and/or synthetic structures) capable of reproducing the physical properties (presence of aggregates,...) and chemical (oxidation-reduction properties,...) of natural soils which are extensively described in the scientific literature (Jenny, H. 1941. Factors of soil formation: a system of quantitative pedology. McGraw-Hill, New York; Calvet, R. 2003. Le sol: propriétés et fonctions. Tome 1 Constitution, structure et phénomènes aux interfaces. Editions France Agricole. Paris; Wesley, L.D. 2009. Soil formation, composition and basic concepts, in Fundamentals of soil mechanics for sedimentary and residual soils, John Wiley & Sons, Inc, Holokin, NJ, USA).

For the purpose of the invention, the preferred physico-chemical properties of soil are:

- the presence of fine mineral and/or organic particles (clay, loam) having an apparent diameter lower than 200 microns, preferably lower than 50 microns with a specific surface area higher than 5 $m^2.g^{-1}$ and containing positive

and/or negative electric charges; these fine particles can adsorb catalyzers or act as catalyzers. The concentration of fine particles is preferentially comprised between 100 and 900 g.kg$^{-1}$ soil;

- The presence of electric charges on soil particles. These charges promote adsorption of catalyzers and electric connectivity of soil matrix. The electric charges of soil particles can be estimated by measuring the cationic exchange capacity (CEC) using the method of Metson (Metson, A.J., 1956. Methods of chemical analysis for soil survey samples. NZ Soil Bur Bull n°12). The CEC of soil particles is preferentially comprised between 1 and 50 cmol.kg$^{-1}$ soil;
- The presence of humified soil organic matter (SOM) that can adsorb catalyzers or act as catalyzers;
- The SOM can also be used as a source of substrate for the purpose of the invention (biobattery);
- The fine textured minerals must be mixed with coarse textured materials (e.g. sand) to facilitate diffusion of soluble compounds and gas in soil matrix; the minimal concentration of coarse textured materials is preferentially greater than 100 g.kg$^{-1}$ soil;
- A micro-heterogeneity of soil pH and redox (at micro- and nanoscale);
- A buffer capacity: the soil matrix must contain cations and anions able to buffer variation of the pH;
- The porosity of soil matrix permitting gas and soluble compounds diffusion;
- The soil pH is preferentially between 3 to 9;
- The organic matter content is preferentially between 5 to 500 g of C kg$^{-1}$ soil;
- The soil organic matter must be preferentially humified (previously transformed by soil microorganisms) with C/N ratio between 5 and 20. The soil C/N ratio is determined after measurement of soil organic C and N content by combustion using an elemental analyzer.

The soil particles are defined as follows: clay (<0.2 microns), loam (2-50 microns) and fine sand (50-250 microns). All particles bigger than 250 microns are considered as coarse sand and stone and are not essential for the invention.

The soil may be of natural or of synthetic origin.

A soil matrix can be artificially prepared by mixing minerals of different sizes (clay, loam and sand) in different proportions.

This mineral matrix can be activated by adding organic matter and different catalyzers, this activation can be performed by incubating soil minerals with micro-organisms before sterilization or by addition of extracellular components, such as enzymes, co-factors, metals, minerals, before or after sterilization.

Table I below presents some examples of physico-chemical composition of soils usable for the invention.

Table I

| Sampling information | | | Soil texture (in g per kg) | | | | | Soil chemical properties | | | | Soil organic matter | | |
|---|---|---|---|---|---|---|---|---|---|---|---|---|---|---|
| Soil layer (in cm) | Land use | Country | Clay | Fine loam | Coarse loam | Fine sand | Coarse sand | CEC Metson (cmol+/kg) | Al oxides (g per 100g) | Fe oxides (g per 100 g) | pH | Soil organic C content (%) | Soil organic N content (%) | soil C/N |
| 0-20 | Grassland | Austria | 163 | 265 | 146 | 169 | 257 | 20,7 | 0,458 | 2,09 | 6,6 | 5,60 | 0,67 | 8,43 |
| 0-20 | Grassland | Brazil | 143 | 39 | 21 | 270 | 527 | 3,94 | 0,475 | 2,05 | 7 | 1,48 | 0,12 | 11,95 |
| 0-20 | Forest | Danemark | 101 | 109 | 115 | 440 | 235 | 9,52 | 0,182 | 0,55 | 4,3 | 3,37 | 0,37 | 9,13 |
| 40-60 | Forest | Danemark | 147 | 81 | 80 | 353 | 339 | 7,29 | 0,19 | 0,681 | 6,4 | 0,33 | 0,03 | 10,01 |
| 0-20 | Forest | Finland | 64 | 146 | 127 | 202 | 461 | 9,93 | 1,04 | 1,26 | 5,5 | 2,64 | 0,30 | 8,75 |
| 0-20 | Crops | France | 153 | 266 | 481 | 77 | 23 | 13,3 | 0,113 | 0,87 | 7,8 | 1,68 | 0,37 | 4,59 |
| 40-60 | Crops | France | 276 | 252 | 410 | 57 | 5 | 12,5 | 0,131 | 1,06 | 8 | 0,67 | 0,10 | 6,63 |
| 0-20 | Grassland | France | 193 | 452 | 98 | 79 | 178 | 25,1 | 1,88 | 3,2 | 5,3 | 12,19 | 1,66 | 7,33 |
| 40-60 | Grassland | France | 70 | 362 | 119 | 72 | 377 | 11,3 | 0,911 | 2,25 | 6,4 | 1,85 | 0,29 | 6,38 |
| 0-20 | Crops | Fance (FWI) | 672 | 190 | 46 | 42 | 50 | 12,3 | 1,08 | 6,95 | 4,9 | 1,20 | 0,20 | 5,96 |
| 0-20 | Forest | Germany | 194 | 207 | 177 | 307 | 115 | 10,5 | 0,222 | 0,815 | 4,2 | 2,61 | 0,14 | 18,93 |
| 40-60 | Forest | Germany | 283 | 205 | 177 | 251 | 84 | 10,9 | 0,444 | 1,8 | 4,9 | 0,43 | 0,05 | 9,39 |
| 0-20 | Forest | Nederland | 62 | 74 | 100 | 297 | 467 | 7,98 | <0.02 | 0,091 | 3 | 6,02 | 0,64 | 9,44 |
| 0-20 | Grassland | Hungary | 100 | 24 | 25 | 535 | 316 | 10,2 | <0.02 | <0.02 | 8,6 | 4,40 | 0,56 | 7,80 |
| 0-20 | Forest | Italy | 298 | 267 | 166 | 195 | 74 | 17,6 | <0.02 | 0,272 | 7,9 | 4,06 | 0,51 | 8,03 |
| 0-20 | Crops | Niger | 48 | 13 | 41 | 518 | 380 | 1,22 | 0,039 | 0,486 | 6,8 | 0,13 | 0,02 | 5,94 |
| 0-20 | Grassland | New Zealand | 297 | 281 | 200 | 101 | 121 | 25,2 | 0,492 | 1,54 | 6,5 | 4,26 | 0,30 | 14,27 |
| 0-20 | Crops | Pakistan | 88 | 94 | 109 | 401 | 308 | 3,69 | 0,109 | 0,509 | 9,1 | 1,18 | 0,07 | 16,52 |
| 0-20 | Forest | Quebec | 148 | 307 | 160 | 215 | 170 | 20,9 | 0,616 | 1,55 | 3,9 | 6,71 | 1,04 | 6,45 |
| 0-10 | Grassland | Russia | 249 | 310 | 328 | 80 | 33 | 16,7 | 0,093 | 0,605 | 7,2 | 2,18 | 0,33 | 6,59 |
| 0-20 | Crops | Russia | 493 | 366 | 121 | 15 | 5 | 40 | 0,301 | 1,01 | 7,3 | 5,15 | 0,80 | 6,46 |
| 0-20 | Savannah (herbaceous area) | Senegal | 75 | 20 | 49 | 474 | 382 | 5,26 | 0,054 | 0,398 | 7,2 | 0,61 | 0,08 | 7,65 |
| 40-60 | Savannah (herbaceous area) | Senegal | 64 | 11 | 25 | 488 | 412 | 3,54 | 0,052 | 0,418 | 7,6 | 0,40 | 0,06 | 7,08 |
| 0-20 | Grassland | UK | 175 | 145 | 99 | 313 | 268 | 10,4 | 0,208 | 1,43 | 6,3 | 2,26 | 0,21 | 10,69 |

(continued)

| Sampling information | | | Soil texture (in g per kg) | | | | | Soil chemical properties | | | | Soil organic matter | | |
|---|---|---|---|---|---|---|---|---|---|---|---|---|---|---|
| Soil layer (in cm) | Land use | Country | Clay | Fine loam | Coarse loam | Fine sand | Coarse sand | CEC Metson (cmol+/kg) | Al oxides (g per 100g) | Fe oxides (g per 100 g) | pH | Soil organic C content (%) | Soil organic N content (%) | soil C/N |
| 0-20 | Peatland | UK | 305 | 255 | 107 | 202 | 131 | 38 | 0,463 | 0,475 | 4,8 | 21,97 | 3,30 | 6,66 |
| 0-20 | Crops | USA | 226 | 517 | 174 | 12 | 71 | 10,8 | 0,373 | 2,66 | 7,4 | 1,90 | 0,26 | 7,21 |
| 0-20 | Grassland | USA | 234 | 490 | 179 | 11 | 86 | 11,7 | 0,489 | 2,69 | 6,7 | 1,92 | 0,31 | 6,27 |
| 0-20 | Orchard | Vietnam | 680 | 141 | 49 | 71 | 59 | 9,68 | 1,06 | 8,82 | 5,3 | 2,34 | 0,27 | 8,55 |
| 10-40 | Savannah (herbaceous area) | South Africa | 238 | 62 | 62 | 158 | 480 | 20,8 | 0,293 | 2,64 | 7,9 | 1,43 | 0,17 | 8,42 |
| 0-20 | Grassland | France | 258 | 179 | 75 | 95 | 393 | 21,5 | 0,736 | 2,79 | 6,2 | 3,90 | 0,52 | 7,51 |
| 0-30 | Crops | Germany | 290 | 351 | 308 | 29 | 22 | 14,5 | 0,186 | 1,59 | 6,5 | 1,70 | 0,29 | 5,89 |

CEC: cationic exchange capacity. C: carbon. N: nitrogen. Al: aluminium. Fe: iron.

For the purpose of the invention, the soil matrix must be sterilized by a highly efficient method in order to block microbial uptake and secretion of substrates, intermediate metabolites, co-factors and catalysts.

The soil is thus treated so that it does not contain any viable microorganism, viable cells being cells able to multiply and colonize soil matrix; the achievement of an efficient sterilization may be assessed by any method known by the person skilled in the art, for example, by cultivation, optical microscopy observations after live-dead staining and/or fluorescent *in situ* hybridization, biomass estimation (fumigation-extraction method), biomarkers concentration (DNA, RNA), electron microscopy observation (Vance et al., Soil Biology and Biochemistry, 19, 703-707, 1987; Danovaro et al., Applied Environmental Microbiology, 67, 1384-1387, 2001; McNamara et al., Applied Soil Ecology, 24, 117-132, 2003; Maire et al. Biogeosciences, 10, 1155-1167, 2013).

Soil matrix may be sterilized by any methods known by the person skilled in the art; said method may be chosen amongst irradiation with gamma rays (for example at 45 kGy), toxics (fumigation with $ClCH_3$, glutaraldehyde, formaldehyde, ethylene oxide...) and heat treatments (autoclaving, dry heating...) or combination thereof.

According to the present invention, an electrolyte is a substance that produces an electrically conducting solution when dissolved in a polar solvent, such as water; this includes most soluble salts, acids, and bases. The soil matrix naturally contains electrolytes, but their quantity might be insufficient, that is why the addition of electrolyte in the invention is optional but can improve the efficiency of process. The salt concentration in added electrolyte is preferentially comprised between 10 to 200 mM.

For the purpose of the present invention, the moisture content of sterilized soil is preferentially comprises between 10 and 200% of dry weight of soil.

Optionally, the soil matrix may be enriched with additives inducing or increasing its activation such as enzymes (e.g. enzymes involved in Krebs cycle), co-factors (e.g. NAD+/NADH), metals (e.g. $Fe^{2+/3+}$), minerals (e.g. clay)... Examples of such additive also include cell-free cell extracts such as cell-free yeast extract as described in Example 2. These additives are preferably introduced initially in the sterilized soil; their concentration is preferably comprised between 1 and 20 $mmole.L^{-1}$ electrolytes, these ranges of concentration are expressed as a function of the initial volume of electrolyte added to the soil, for co-factors, between 1 and 3000 $U.L^{-1}$ electrolytes for enzymes depending on type of enzymes....

The working of the biofuel cell of the invention may require the addition of substrate consisting of carbonated organic compounds, preferably soluble organic carbon source; substrate includes different carbohydrates (glucose, pyruvates, keto glutarate etc), polyol (e.g. glycerol) or alcohol (e.g. methanol). The concentration of the added substrate is preferably comprised between 5 and 100 $mmole.L^{-1}$ electrolytes.

The first conductive material (anode) is composed of a conductive material, such as a conductive metal, in particular platinum, copper, silver, aluminum, gold or steel, or carbon, for instance vitreous carbon, carbon fibers, fibers of carbon nanotubes.

The preferred form of this first conductive material is such that it offers a large exchange surface; it may be a wire, a mesh, a plate, a cylinder or fiber web...

The second conductive material (cathode) is also composed of conductive material, such as a conductive metal, in particular platinum, copper, silver, aluminum, gold or steel, or carbon, for instance vitreous carbon, carbon fibers, fibers of carbon nanotubes, or else.

The preferred form of this second conductive material is such that it offers a large exchange surface; it may be a wire, a mesh, a plate, a cylinder or fiber web...

Optionally a redox polymer is applied on the anode and/or the cathode in order to improve the electrical conduction between the sterilized soil matrix and the second conductive material and also the stability of the system; the redox polymer may, for example, be chosen from ferrocene-, osmium- and ruthenium-based polymers and conductive polymers such as, for example, polypyrrole and polyaniline.

Preferably, the anode and the cathode of the biofuel cell of the invention are separated by a proton exchange membrane such as nafion,

In a particular embodiment of the biofuel cell of the invention, the conductive material of the cathode is partially entrapped in a second biocatalytic complex composed of a sterilized soil matrix and optionally a second electrolyte. Said second biocatalytic complex composed of a sterilized soil matrix and said second electrolyte are as defined before. In such embodiment, the electrolyte of the anode and the second electrolyte are the same.

The present invention also refers to the use of a biocatalytic complex composed of:

- a sterilized soil and optionally an electrolyte, and
- a conductive material partially entrapped into said soil,

as an electrode in a biofuel cell.

The sterilized soil, electrolyte and conductive material are as defined above.

The present invention further refers to a process of electricity generation using the biofuel cell according to the invention, said process comprising the steps of preparing a biofuel cell as described before and of collecting the generated electricity.

Optionally, the process of electricity generation comprises an additional step of introducing substrate and/or additives in the sterilized soil of the anode of said biofuel cell.

The present invention also refers to a bioreactor for the electrochemical synthesis of organic molecules composed of:

- an anode comprising a first biocatalytic complex composed of a first sterilized soil and optionally a first electrolyte in the presence of $H_2O$, and a first conductive material partially entrapped into said first sterilized soil;
- a cathode comprising a second biocatalytic complex composed of a second sterilized soil and optionally a second electrolyte in presence of $CO_2$, and a second conductive material partially entrapped into said second sterilized soil;
- an electric generator connected to said anode and cathode.

The working of the bioreactor for the electrochemical synthesis of organic molecules of the invention may require the addition of additives and/or electrolytes as previously defined.

The present invention further relates to a process of electrochemical synthesis of organic molecules using the bioreactor for the electrochemical synthesis of organic molecules as described above comprising the steps of:

- introducing additives in the first/second sterilized soil of said bioreactor, and
- recovering the sterilized soil enriched in said synthesized organic molecules.

In one embodiment the synthesized organic molecules are fuels that can be used as source of energy in proposed biofuel cell or other systems.

In another embodiment, synthesized organic molecules are substance of interest and are purified.

Description of the figures:

Figure 1 is a graph showing the rate of total $CO_2$ emissions from irradiated soils with and without addition of $^{13}$C-labelled glucose (S and S+G treatments, respectively) as described in Examples 1 and 2.

Figure 2 is a graph showing the emission rate of $^{13}$C-labelled $CO_2$ from the irradiated soil amended with $^{13}$C-labelled glucose (S+G treatment) as described in Examples 1 and 2.

Figure 3 is a graph showing the rate of total $CO_2$ emissions from yeast extract incubated with glucose (G+YE), irradiated soil with $^{13}$C-labelled glucose (S+G) and irradiated soil with $^{13}$C-labelled glucose and yeast extract (S+G+YE) as described in Example 2.

Figure 4 is a graph showing the emission rate of $^{13}$C-labelled $CO_2$ from yeast extract incubated with $^{13}$C-labelled glucose (G+YE), yeast extract incubated with $^{13}$C-labelled glucose and irradiated soil (S+G+YE) and irradiated soil incubated with $^{13}$C-labelled glucose (S+G) as described in Example 2.

Figure 5 is a graph showing the emission rate of $^{13}$C-labelled $CO_2$ from yeast extract with $^{13}$C-labelled glucose and irradiated soil (S+G+YE) and irradiated soil incubated with $^{13}$C-labelled glucose (S+G) as described in Example 2.

Figure 6 is a scheme of the fuel cell described in Examples 3A and 3B; it is composed of an anode generating a gradient of $H^+$ and electrons from the oxidation of organic substrates. The complete oxidation of substrates at the anode is ensured by the diversity of catalysts present in soil particles. The reduction of $O_2$ into $H_2O$ at the cathode is mediated by platinum.

Figure 7 is a graph showing the power density *versus* current density of SFC (irradiated soil) and benthic fuel cell (non irradiated soil) as described in Example 3B.

Figure 8 is a graph showing the cell voltage versus current density of SFC (irradiated soil) without and with addition of sodium pyruvate as described in Example 3B.

Figure 9 is a graph showing the power density versus current density for SFC (irradiated soil) without and with addition of sodium pyruvate substrate as described in Example 3B.

Figure 10 is a graph showing the maintenance of SFC power density over time (in % of initial power density) as described in Example 3B.

Figure 11 is a graph showing the cumulated amount of $CO_2$ produced in SFC (irradiated soil) and benthic fuel cell (no irradiated soil) with and without addition of sodium pyruvate as substrate as described in Example 3B.

Figure 12 is a scheme of the fuel cell describes in Examples 4A and 5; it is composed of an anode generating a gradient of $H^+$ and electrons from the oxidation of organic substrates. The complete oxidation of substrates at the anode is ensured by the diversity of catalysts present in soil particles. The reduction of $O_2$ into $H_2O$ at the cathode

is mediated by catalysts of soil matrix.

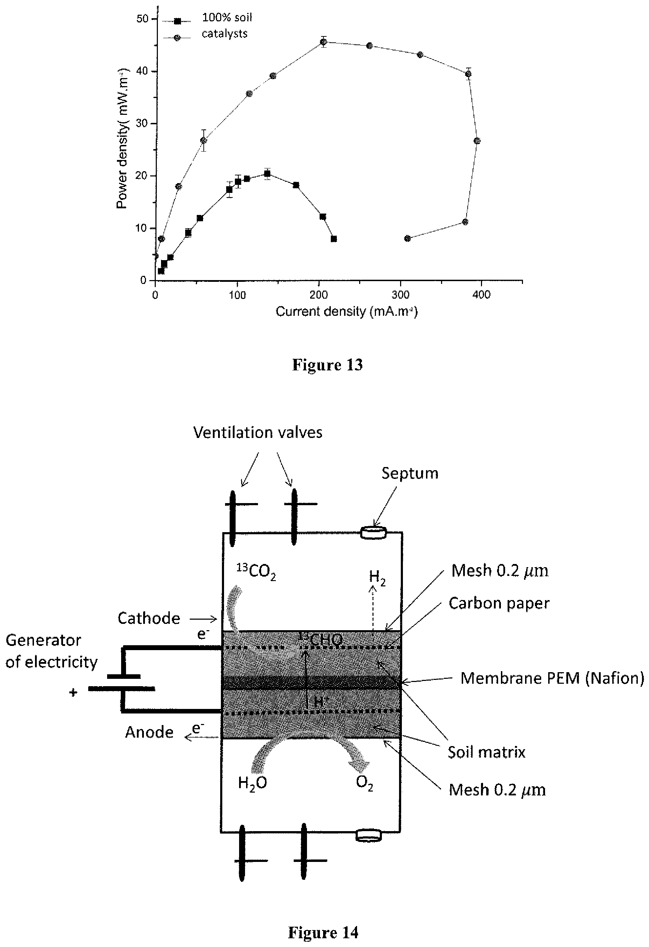

Figure 13 is a graph showing the power density *versus* current density of SFC made of 100% soil matrix catalysts (100% soil catalysts) or soil matrix catalysts at the anode and platinum at the cathode (Pt cathode) as described in Example 4B. Figure 14 is a scheme of the electrochemical production unit described in Example 6. The unit produces small organic C molecules (CHO) from carbon dioxide ($CO_2$) and water ($H_2O$) using the energy provided by an electric current. The reactions are catalyzed by a soil matrix prepared with $\gamma$-irradiated-soil. The water is oxidised into oxygen ($O_2$) at the anode while the $CO_2$ is reduced into CHO at the cathode using the protons (H+) released by the oxidation of water. The protons ($H^+$) can also be reduced into $H_2$ at the cathode.

**Example 1 - Setting a highly persistent (>800 days) oxidative activity in a soil matrix.**

A natural soil matrix where living cells have been fully destroyed is able to maintain an oxidative process during at least 1606 days. The oxidative process leads to the decarboxylation of diverse organic C compounds present in the soil matrix and $^{13}$C-labelled glucose added to the soil matrix.

**Method**

*Preparation of the soil matrix.* The samples were from the 0-20 cm soil layer at the site of Theix (Massif Central, France). The soil is a sandy loam Cambisol developed on granitic rock. The soil has the following characteristics: $pH_{water}$ = 6.5, carbon content = 39 g C kg$^{-1}$, clay = 26%, silt = 25%, sand = 49%. Fresh soil samples were mixed, sieved at 2 mm, dried to 5% (w/w of water per dry soil) and irradiated with gamma rays at 45 kGy ($^{60}$Co, IONISOS, ISO14001, France).

*Incubations of soil matrix.* Experimental microcosms consisted of 20 g of $\gamma$-irradiated-soil incubated with 6 mL of water (S treatment) or 5 mL of water and 1 mL of $^{13}$C-labelled glucose solution (S+G treatment). The glucose solution contained 60 mg C-glucose mL$^{-1}$ and was prepared by mixing unlabelled glucose with $^{13}$C labelled glucose ($C_6$ Atom% $^{13}$C = 99%) to obtain a final delta $^{13}$C of 3712‰. The glucose solution was sterilized by filtration at 0.2$\mu$m. Three replicates per treatment were prepared. The volumes of water and glucose solution were calculated to incubate soils at a water potential of -100 kPa. Water and soil matrix microcosms were incubated at 25°C for 845 days. The $CO_2$ accumulation and $O_2$ consumption generated by the oxidative metabolism in the soil matrix were analysed after 0.5, 0.8, 1.4, 3.5, 10.3, 19.3, 53, 142, 1125 and 1606 days of incubation. After each gas analysis, flasks were flushed with synthetic air ($O_2$, 20%; $N_2$, 80%) moistened by bubbling in water and sterilized by filtration at 0.2 $\mu$m. All manipulations were done under sterile conditions and the sterility of microcosms was verified throughout the incubation through direct fluorescence microscopic observations and TSA-FISH method.

*Gas analysis.* $O_2$ and $CO_2$ concentrations were analyzed by gas chromatography. The isotopic composition ($\delta$ $^{13}$C) of $CO_2$ was quantified using a cavity ring down spectrometer analyzer coupled to a small injection system (Picarro 2131-i analyzer, Picarro Inc., Santa Clara, CA, USA). The gas samples were diluted with synthetic air ($O_2$, 20%; $N_2$, 80%) when $CO_2$ concentration exceeded the operating range of the analyzer. For each period of incubation, the cumulated amount of $CO_2$ was divided by the duration of the period (in days) to calculate the average daily $CO_2$ emission rate. The daily $CO_2$ emission rate was expressed in mg C-$CO_2$ (mg of carbon released as the form of $CO_2$) per day per incubation flask.

**Results**

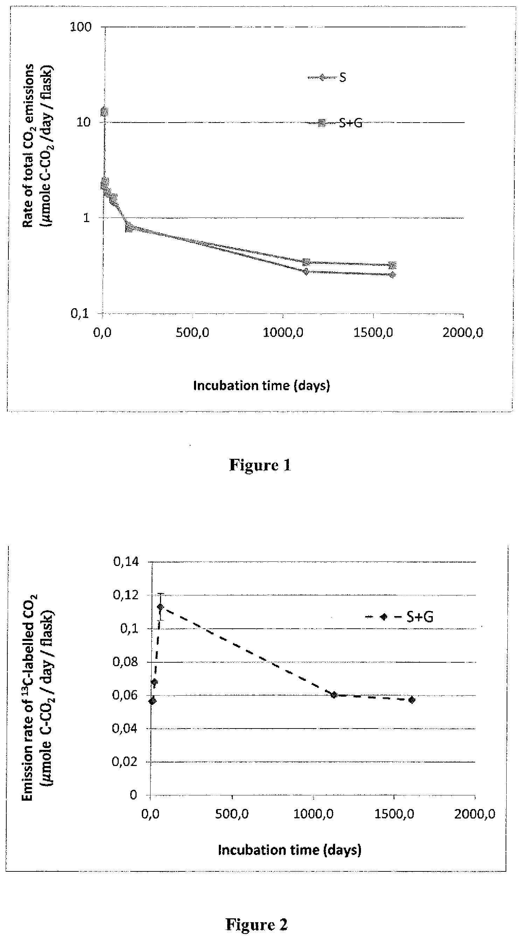

The soil matrix mediated oxidation activity of soil organic C into $CO_2$ during the 1606 days of incubation (see Figure 1). The rate of total $CO_2$ emissions was maximal during the first hours of incubation with 13.2 ± 0.5 $\mu$mol C-$CO_2$ / day / flask and rapidly decreased with time during the first days of incubation. After 10.3 days of incubation, the rate of total $CO_2$ emissions reached 2.36 ± 0.18 $\mu$mol C-$CO_2$ / day / flask. Thereafter, the rate of total $CO_2$ emissions slowly decreased with time to finally stabilize at 0.31 ± 0.007 $\mu$mol C-$CO_2$ / day / flask after 1125 days of incubation. The soil oxidation activity did not significantly change between 1125 and 1606 days of incubation. These results demonstrate the role of soil matrix in providing a persistent oxidative process able to transform soil organic C in $CO_2$.

The addition of glucose to soil had no effect on total $CO_2$ emissions during the first 145 days of incubation. From 845 to 1606 days of incubation, glucose addition significantly increased the rate of total $CO_2$ emissions. These results indicate that the oxidative process carried out by the soil matrix has access to reserve of organic C present in soil. Therefore, the soil oxidative process can maintain during hundreds days of incubation without external addition of primary substrates. After a long period of incubation, when the availability of soluble C becomes limiting, the soil oxidative process can be stimulated by the addition of primary substrate.

The soil matrix oxidized the labelled $^{13}$C-glucose into $^{13}$C-$CO_2$ throughout the 1606 days of incubation (see Figure 2). The rate of glucose oxidation changed with time. It increased with time until to peak at 0.113 ± 0.008 $\mu$mol C-$CO_2$ / day / flask after 53 days of incubation. Thereafter, the rate of glucose oxidation decreased with time to finally stabilize to 0.0573 $\pm$ 0.0008 $\mu$mol C-$CO_2$ / day / flask at 1606 days of incubation. These results demonstrate the capacity of soil matrix to deeply oxidize highly stable molecules such as glucose.

Comparison of Figures 1 & 2 shows that the rate of $^{13}C$-$CO_2$ emissions is low compared to that of total $CO_2$ emissions. This result signifies that the main source of primary substrates for oxidation process is the soil organic C but not the added glucose.

### Example 2 - Increasing the oxidative activity of a soil matrix by adding a cell extract.

The possibility of increasing the oxidative activity of a sterilized soil matrix by adding the intracellular content of yeasts is demonstrated in this example. The supply of yeast extract significantly increased the rate of total $CO_2$ emissions and glucose oxidation from soil matrix during 1606 days of incubation. Without soil matrix, the oxidative activity of yeast extract rapidly and dramatically decreased over the time. After 1606 days of incubation, the oxidation rate induced by the yeast extract is 31 times higher in the soil matrix than in solution. These findings demonstrate 1) the possibility of manipulating the oxidative activity of soil matrix by adding cell components and 2) the capacity of soil matrix to stabilize a respiratory-like cellular metabolism.

### Method

*Preparation of soil matrix.* The samples were from the 0-20 cm soil layer at the site of Theix (Massif Central, France). The soil is sandy loam Cambisol developed on granitic rock. The soil has the following characteristics: $pH_{water}$ = 6.5, carbon content = 39 g C $kg^{-1}$, clay = 26%, silt = 25%, sand = 49%. Fresh soil samples were mixed, sieved at 2 mm, dried to 5 % (w/w of water per dry soil) and irradiated with gamma rays at 45 kGy ($^{60}Co$, IONISOS, ISO14001, France).

*Production of cell-free yeast-extract. Pichia pastoris* cells were cultured at 28°C in a 1.5 L capacity Applikon bioreactor containing synthetic medium. This medium contained 80 $\mu$g L-1 D-biotin, 40 g L-1 glycerol and a mixture of micro and macronutrients. The pH of the medium was regulated at 5 using a $NH_4OH$ solution (15%, v/v) that also served as a nitrogen source. Dissolved $O_2$ was measured using a polarographic probe and was maintained at over 30% saturation by stirring up to 1800 rpm and aeration (an injection of 1 L of air per liter of medium per minute). The yeast culture was harvested at the end of the growth phase by centrifugation at 5000 x g for 10 min at 5°C to yield a hard pellet. To remove the culture medium, cells were washed and re-centrifuged three times in potassium phosphate buffer (0.1M, pH = 6.5). The cell pellet was re-suspended in a small volume of potassium phosphate buffer (Vyeast/Vbuffer = 2/1) before cells were disrupted with a French pressure cell press (100 MPa). Unbroken cells and large cell debris were removed from the yeast extract by centrifugation at 25000 x g and 5°C. The yeast extract was filtered under sterile conditions at 0.2 $\mu$m to obtain a cell-free extract. The cell-free yeast extract was immediately incorporated into water and soil matrix microcosms under sterile conditions.

*Yeast extract incubation in solution and soil matrix.* Experimental microcosms consisted of 5 mL of cell-free yeast extract and 1 mL of $^{13}C$-labelled glucose with or without addition of 20g of $\gamma$-irradiated-soil (S+G+YE and G+YE treatments, respectively) placed in 250mL airtight flasks. Irradiated-soil with glucose was incubated as control (S+G treatment). The glucose solution contained 60 mg glucose $mL^{-1}$ and was prepared by mixing unlabelled glucose with $^{13}C$ labelled glucose ($C_6$ Atom% $^{13}C$ = 99%) to obtain a final delta $^{13}C$ of 3712‰. The glucose solution was sterilized by filtration at 0.2$\mu$m. Three replicates per treatment were prepared. The volume of solutions (glucose + yeast extract) were adjusted to incubate soils at a water potential of -100 kPa. Water and soil matrix microcosms were incubated at 25°C for 845 days. The $CO_2$ accumulation and $O_2$ consumption generated by the oxidative metabolism in soil matrix and yeast extract were analyzed after 0.5, 0.8, 1.4, 3.5, 10.3, 19.3, 53, 142, 1125 and 1606 days of incubation. After gas analysis, flasks were flushed with synthetic air ($O_2$, 20%; $N_2$, 80%) moistened by bubbling in water and sterilized by filtration at 0.2$\mu$m. All manipulations were done under sterile conditions and the sterility of microcosms was verified throughout the incubation through direct fluorescence microscopic observations and TSA-FISH method.

### Results

The incubation of yeast extract with glucose in solution or soil matrix triggered intense oxidative activities during the first hours of incubation (see Figure 1). The rate of total $CO_2$ emissions was higher in G+YE than in S, S+G or S+G+YE treatments during the first hours of incubation. This short-term negative effect of soil matrix is explained by the limited diffusion of substrates and co-factors in soil matrix compared to water. It might also be due to interactions between soil particles and enzymes decreasing their activity. However, the rate of total $CO_2$ emissions in G+YE decreased below that of S+G or S+G+YE treatments from day 19.3 until the end of incubation. After 1606 days of incubation, the oxidative activity is in average 16 times higher in S+G or S+G+YE treatment than in G+YE treatment. The lower oxidative activity in G+YE treatment cannot be afforded to a lack of substrate since only 30% of added labelled glucose were oxidized (data not shown). These results demonstrate the exceptional stability of soil catalysts compared to free catalysts in solutions. The catalysts of soil matrix were able to mineralize a diversity of C sources including soil organic C compounds and added $^{13}C$-labelled glucose (see Figures 1 & 2).

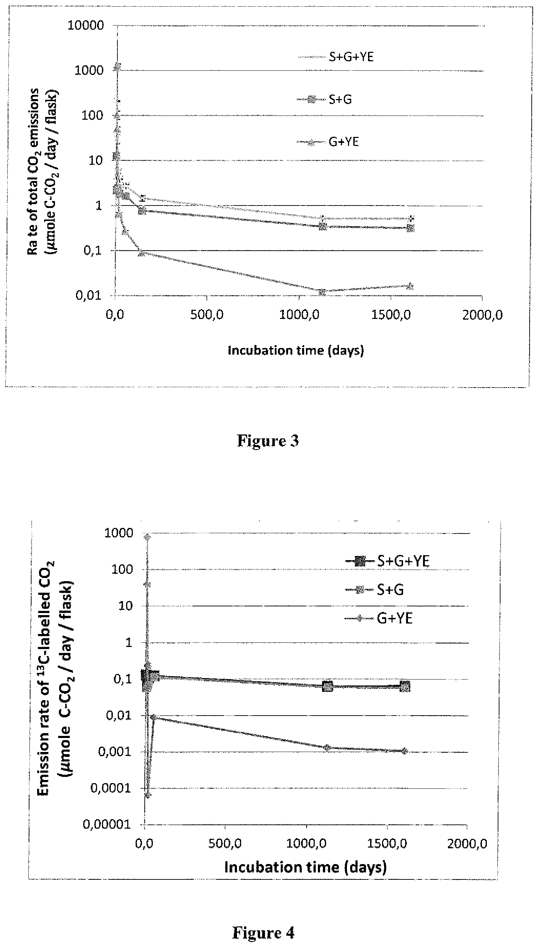

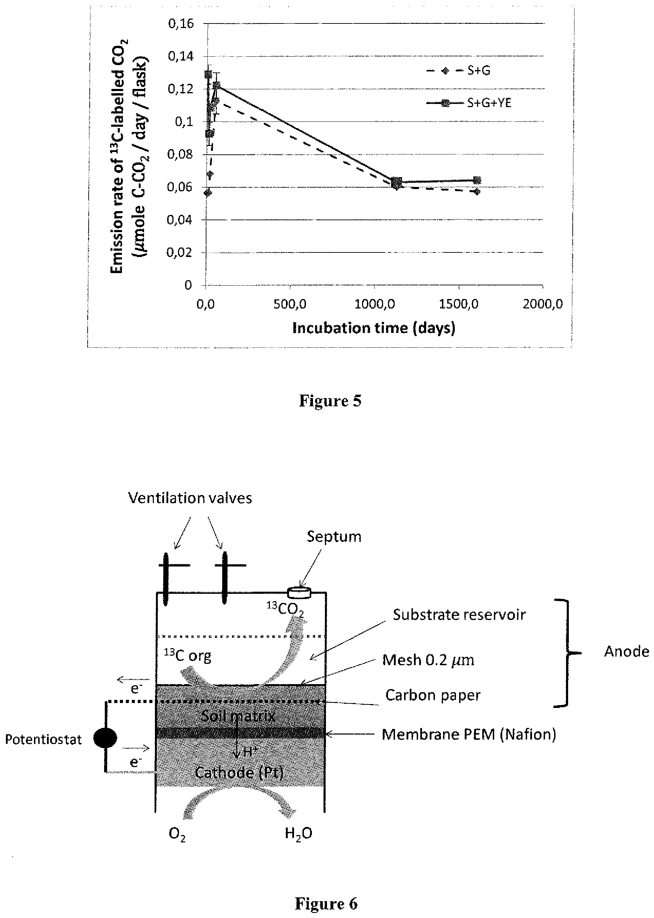

The addition of yeast extract significantly increased rate of total $CO_2$ emissions and glucose oxidation from soil matrix (see Figure 3 & Table II). The stimulation of soil oxidative activity was maximal during hours following yeast extract addition with 1534% increase of total $CO_2$ emissions at 0.5 day of incubation (Table II). The stimulation of total $CO_2$ emissions rapidly decreased from 0.5 to 3.5 days of incubation and tends to stabilize thereafter. After 1606 days of incubations, the rate of total $CO_2$ emissions was increased by 60% in the S+G+YE treatment compared to the control S+G. The oxidation of $^{13}C$-labelled glucose into $^{13}CO_2$ was also stimulated by the addition of yeast extract though the stimulation was less pronounced than for total $CO_2$ emissions (see Figures 4 & 5). After 1606 days of incubation, the rate of glucose oxidation was increased by 12% in the S+G+YE treatment compared to the control S+G. Collectively, these results demonstrate the possibility of increasing the oxidative process generated in a soil matrix over long-term (>1600 days) by adding a cell extract.

*Table II. Rate of total $CO_2$ emissions from irradiated soil incubated with $^{13}C$-labelled glucose (S+G) and irradiated soil $^{13}C$-labelled glucose and yeast extract (S+G+YE), and percentage increase of rate of total $CO_2$ emissions triggered by addition of yeast extract.*

| Time (days) | Rate of total $CO_2$ emissions ($\mu$mole C-$CO_2$ /day /flask) | | % increase |
|---|---|---|---|
| | S+G | S+G+YE | |
| 0.50 | 12.71 | 207.66 | 1534% |
| 3.54 | 2.19 | 4.53 | 107% |
| 10.29 | 2.42 | 5.63 | 133% |
| 19.29 | 1.86 | 3.87 | 109% |
| 53.00 | 1.65 | 2.73 | 65% |
| 142.00 | 0.78 | 1.46 | 88% |
| 1125.00 | 0.34 | 0.52 | 51% |
| 1606.00 | 0.32 | 0.52 | 62% |

## Example 3A - Air breathing fuel cell using soil matrix catalysts at the anode.

Examples 3A and 3B demonstrate the possibility of building an air breathing fuel cell by using soil matrix catalysts at the anode.

In this example 3A, the anode made with sterilized soil was able to convert chemical energy from a variety of fuels such as glycerol, pyruvate and keto-glutarate into electricity. These fuels have high energy-storage densities (higher than lithium-ion batteries) and were completely oxidized by soil catalysts. The very high stability of soil catalysts can maintain fuel oxidation and electricity production during hundred days.

## Method

*Preparation of soil matrix.* The samples were from the 0-20 cm soil layer at the site of Theix (Massif Central, France). The soil is sandy loam Cambisol developed on granitic rock. The soil has the following characteristics: $pH_{water}$ = 6.5, carbon content = 39 g C kg$^{-1}$, clay = 26%, silt = 25%, sand = 49%. Fresh soil samples were mixed, sieved at 2 mm, dried to 5 % (w/w of water per dry soil) and irradiated with gamma rays at 45 kGy ($^{60}Co$, IONISOS, ISO14001, France).

*Anode preparation.* The anode consisted of 15 g of $\gamma$-irradiated-soil, 15 mL of electrolytes and a carbon paper collecting the electrons generated by oxidation reactions (see Figure 6). Four substrate treatments were tested: no substrate addition, glycerol, pyruvate and keto-glutarate. For the no substrate treatment, electrolytes contained 0.1 M potassium phosphate buffer (pH 7.5), 10 mM $MgCl_2$, 0.5 $MnCl_2$. For substrate treatment, 10 mM of glycerol, pyruvate or keto-glutarate were added to 0.1 M potassium phosphate buffer (pH 7.5), 10 mM $MgCl_2$ and 0.5 $MnCl_2$. The glycerol, pyruvate and keto-glutarate were $^{13}C$ labelled (delta $^{13}C$ = 2500 ‰). The $^{13}C$ labelling enabled to separate the oxidation of soil organic C and added substrates.

*Cathode preparation.* The cathode was platinum gauze (20 cm$^2$), electrodeposited with platinum-black. The catholyte (0.1 M potassium phosphate buffer (pH 7.5)) was continuously saturated with $O_2$.

*Fuel cell assembling.* The anode and cathode were fixed into a polymethylmethacrylate (PMMA) tube of 5 cm diameter and 8 cm high. The anode was surmounted by a reservoir of 100 mL where $CO_2$ released by oxidation reactions could accumulate (see Figure 6). The reservoir was also used to add electrolyte with fresh substrate when the substrate added at the beginning of the experiment was exhausted. The anode was separated from the reservoir with a polyvinylidene mesh of 0.2 $\mu$m pore size to maintain soil matrix in contact with the carbon paper and the proton exchange membrane (PEM). The mesh was also used to prevent soil matrix from microbial contamination during cell loading with fresh substrate. The reservoir was equipped of two valves in order to flush reservoir and anode with pure $N_2$ at the beginning of experiment and after each gas measurement. These flushes ensured the anoxic condition at the anode. The reservoir was also equipped of a septum to allow gas sampling. All components of fuel cell were sterilized and assembled under sterile conditions.

*Measurement of soil organic C and added substrate oxidation.* The total oxidation of soil organic C and added substrates were measured during periods of inactivity and activity of fuel cell. The measurement during cell inactivity allowed determining the stability of fuel cell in absence of any connection. The measurement during cell activity allowed determining the efficiency of converting chemical energy in electricity. The total oxidation of soil organic C and added substrates corresponded to the accumulation of $CO_2$ in cell reservoir. The $CO_2$ accumulation was quantified by repeated measurement of $CO_2$ concentration by chromatography after sampling of gas reservoir. The oxidation of added $^{13}$C-labelled substrate was specifically quantified by following the production of $^{13}$C-labelled $CO_2$. The isotopic composition (delta $^{13}$C) was determined using a cavity ring down spectrometer analyzer coupled to a small injection system (Picarro 2131-i analyzer, Picarro Inc., Santa Clara, CA, USA).

*Electrochemical characterization of fuel cell.* All electrochemical tests were performed using a multi-potentiostat interfaced to a PC. These tests included power density, current density and open circuit potential, as well as charging and discharging profile output. The stability over time of fuel cell was determined by conducting electrochemical tests after 10, 50 and 100 days of cell building. Additional inputs of $^{13}$C-labelled substrates were performed when substrates were exhausted.

## Example 3B - Air breathing fuel cell using soil matrix catalysts at the anode.

This example also demonstrates the possibility of building an air breathing fuel cell by using soil matrix catalysts at the anode.

Soil matrix was obtained by sterilizing soil with $\gamma$ irradiation. The performance of created fuel cell was quantified by measuring the open circuit voltage (OCV), the power density and the stability of power density over time. The performance of created fuel cell was compared to a classic benthic cell using living non-irradiated soils. All fuel cells and treatments were conducted in triplicates. Presented results are means obtained from these triplicates.

### *Materials and Methods*

*Preparation of soil matrix.* The samples were from the 0-20 cm soil layer at the site of Theix (Massif Central, France). The soil is sandy loam Cambisol developed on granitic rock. The soil has the following characteristics: $pH_{water}$ = 6.5, carbon content = 39 g C $kg^{-1}$, clay = 26%, silt = 25%, sand = 49%. Fresh soil samples were mixed, sieved at 2 mm, dried to 12 % (w/w of water per dry soil) and irradiated with gamma rays at 45 kGy ($^{60}$Co, IONISOS, ISO14001, France).

*Chemical and Regents.* Pyruvate sodium ($\geq$ 99 %), monopotassium phosphate, potassium phosphate dibasic were purchased from Sigma Aldrich (Saint Quentin Fallavier, France). Cloth carbon and titanium wire were purchased from good fellow (France). All the solutions were prepared in ultrapure water (resistivity less than 18 M$\Omega$ cm) obtained from a Millipore purification system.

*Soil fuel cell (SFC) construction.* SFC was assembled in bottle (250 ml bottle, corning Inc: 320 ml capacity) that could be sealed with gas-tight septa in order to follow the accumulation of $CO_2$ generated by respiration process. In order to build the anode, the following materials were deposited at the bottom of bottle: 50 g of irradiated soil, a piece of 28 $cm^2$ of carbon cloth that was used as collector of electrons, 150 g of irradiated soil. The carbon cloth was connected a titanium wire that went out from the bottom of bottles trough a septum. A solution of 0.1M of phosphate buffer (150 ml, pH 7.2) was added as electrolyte. The cathode was a platinum plate (2 $cm^2$) connected to a titanium wire that went out from the top of bottles through a septum. The platinum plate was placed at the liquid-air interface in order to promote the reduction of $O_2$ in $H_2O$. The volume of air (20/80 $O_2$, $N_2$) available in the fuel cell was 91 ml. All materials were sterilized and assembled under a laminar flow hood to maintain sterile conditions.

*Comparison of created soil fuel cell to a classic benthic fuel cell.* To demonstrate the advantage of using soil catalysts instead of soil microbial cells to produce electricity, the electric performance of created SFC was compared to a benthic cell made with non-irradiated soils. The same procedure as previously described was applied to build the benthic cell except that soil was not sterilized.

*SFC optimisation.* The soil matrix contained a large reserve of organic C (39 g C $kg^{-1}$) that can be used as source of electrons for the fuel cell. However, most of this organic C is not accessible to soil matrix catalysts because insoluble and bound to minerals. This signifies that the performance of SFC could be enhanced by adding soluble organic carbon. This hypothesis was tested by building two set of fuel cells: with and without addition of sodium pyruvate. For substrate treatment, 50mM of pyruvate sodium was added to phosphate buffer solution.

*SFC stability.* To quantify the stability of SFC, 5 sets of fuel cells (built with irradiated soils) were prepared following the procedure previously described and incubated at 25°C under sterile conditions. Each month during 5 months, a set of SFC was harvested and amended with sodium pyruvate (50 mM in phosphate buffer solution). After substrate addition, the maximal power density of SFC was determined. In order to estimate the half-life of SFC, the loss of power density was fitted to an exponential decay equation:

$$P(t) = P_i \times e^{-kt}$$

The half-life was calculated as $t_{1/2} = \dfrac{\ln(2)}{k}$ .

*Fuel cell measurements.*

i. Electricity production

The voltage (V) and current (I) of fuel cells were measured using a digital multimeter (UNI-T-DT830B). For the determination of the power output, a variable resistance (15 KS2- 30 $\Omega$) was used as an external load with a time interval of 5 min in each load, the current and cell potentials for each resistance were measured. Power (P) generated by fuel cell was calculated as a product of current passing through an external load and voltage drop across the resistor (P = I.V). The measurements were carried out under controlled temperature (22°C). Current and power densities were calculated by dividing the obtained current and power values by the surface area of the anode (28.26 cm$^2$).

ii. Oxidation process.

The oxidation of organic C to $CO_2$ was quantified by measuring the accumulation of $CO_2$ into the bottle when the power density of fuel cells reached its maximum value. The $CO_2$ concentration in headspace of bottle (91 ml) was determined using an infra-red analyzer (Binos 100 4P, Rosemount). The volume of $CO_2$ released by the oxidation process was converted to mole of C-$CO_2$ using the ideal gas law, bottle temperature and pressure. The rate of organic C oxidation (Resp, mmole C-$CO_2$ s$^{-1}$) was calculated by dividing the quantity of accumulating $CO_2$ by time.

iii. Fuel cell efficiency.

The efficiency of fuel cell to convert of organic C to electricity (C mmole$^{-1}$ C-$CO_2$) was calculated as follow:

$$\varepsilon = \frac{I}{Resp}$$

Where I is the current intensity generated by fuel cell (A or C s$^{-1}$) and Resp the rate of organic C oxidation (mmole C-$CO_2$ s$^{-1}$). This efficiency was calculated when the fuel cells delivered their maximal power density.

*Results and discussion*

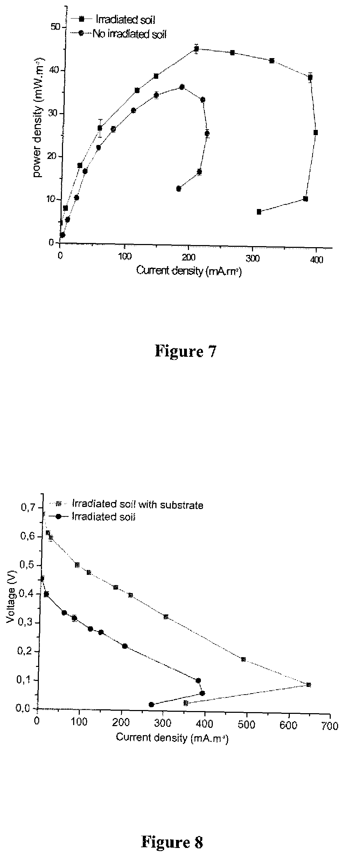

Figure 7 shows the power output from the irradiated soil fuel cell (SFC) and no-irradiated soil fuel cell (Benthic fuel cell), operating without any addition of substrate. For the two fuel cells, the current density and power output gradually increased as loaded resistance decreased until a maximum value. The power generation from fuel cells reached its maximum value when external resistance is equal to internal resistance (Menicucci et al., 2006). Beyond this maximal value, a decrease of loaded resistance induced a rapid decrease of power output from fuel cells. This common phenomenon in fuel cells is called "power overshoot" and is explained by the concurrent decrease of current voltage and intensity (Figure 8) induced by a limitation of mass transport of reactants (Bockris and Srinivasan, 1969). These results are indicative of typical fuel cell behavior.

The voltage and intensity of current was systematically higher for SFC than for benthic fuel cell (irradiated versus non-irradiated soil, Figure 7). Consequently, SFC produced higher maximal power density value (45.7 mW m$^{-2}$) than benthic fuel cell (35.67 mW m$^{-2}$). Importantly, SFC was able to maintain its relatively high power density (> 40 mW m$^{-2}$) on a large range of current density (150-350 mA m$^{-2}$) whereas the power density of benthic fuel cell rapidly decreased when current density exceeded 160 mA m$^{-2}$. Collectively, these results showed the negative effect of microorganisms on electricity production. Microorganisms divert an important part of substrate energy for suppling their cellular activity and synthesis (enzymes, cell constituents etc) decreasing the voltage and intensity of fuel cell. These findings demonstrate that the use of soil matrix catalysts (SFC) instead of soil microorganisms (Benthic fuel cells) can substantially improve the electric performance of fuel cells.

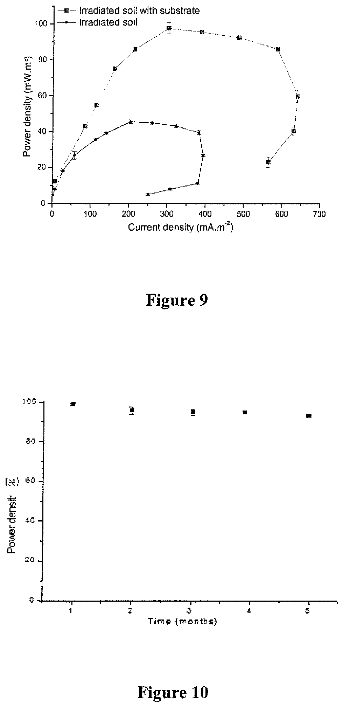

In order to enhance the performance of SFC, an aliquot of sodium pyruvate substrate was added. Figure 8 shows that substrate addition increased voltage and current intensity delivered by SFC. The open circuit voltage (OCV) of SFC increased from $443\pm1$ to $680\pm1$ mV while the maximal power density increased from 45.7 to 97.71 mW m$^{-2}$ after addition of pyruvate (Figure 9). These results demonstrated that redox reactions controlling the release of electrons into SFC are limited by the amount of available substrates. Our findings also signify that the electric performance of SFC can easily be improved by adding soluble substrates.

One of the most important issues for fuel cells is extending their lifetime. The stability of SFC was evaluated by measuring the maximal power density of SFC after addition of sodium pyruvate as substrate over 5 months. Figure 10 shows that SFC retained 95% of its original power density after 5 months of storage at 25°C. Assuming that the loss of power density follows an exponential law, we calculated the halftime of SFC is 5.6 years. To our knowledge, it is the longest lifetime ever recorded for a breathing fuel cell. This exceptional lifetime of SFC is explained by the stability of soil matrix catalysts which are composed of stabilized enzymes on soil particles, soil minerals and soil metallic species (Maire et al, 2013; Kéraval et al., 2016).

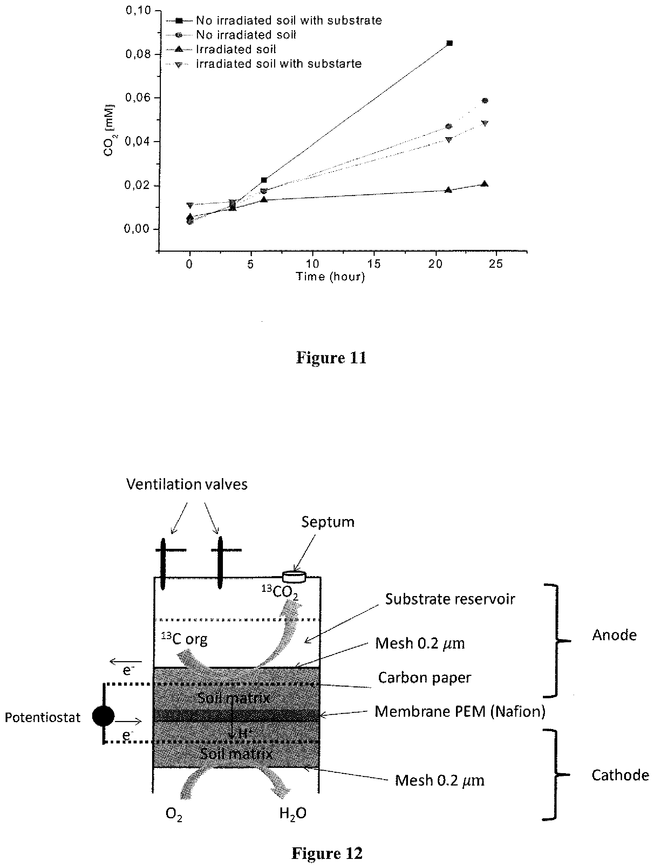

The efficiency of conversion of organic C to electricity (C mmole$^{-1}$ C) is another key parameter to consider since it determines the energy storage density of fuel cells. To calculate this efficiency, the oxidation of organic C to $CO_2$ was quantified for SFC (irradiated soil) and benthic fuel cells (non-irradiated soil) with or without addition of sodium pyruvate. Figure 11 shows that fuel cell functioning induced a continuous production of $CO_2$. The slope of the regression line gave the rate of organic C oxidation. The oxidation rate was significantly higher in benthic fuel cells than in SFC, and was increased by the supply of sodium pyruvate. The concurrent higher power density and lower organic C oxidation of SFC compared to benthic fuel cell (Figures 7 & 11) contribute to the high efficiency of organic conversion to electricity of this type of fuel cell (Table III). The conversion efficiency ranged from 612 to 831 C mmole$^{-1}$ C for benthic fuel cell whereas it reached from 1902 to 3654 for SFC.

*Table III. Efficiency of conversion of organic C to electricity (C/mmole organic C)*

| Type of fuel cell | Substrate treatment | Fuel efficiency (C/mmole C-$CO_2$) |
|---|:---:|:---:|
| Benthic | -S | 831 |
| | +S | 612 |
| SFC | -S | 3654 |
| | +S | 1902 |

**Example 4A - Air breathing fuel cell using soil matrix catalysts at the anode and at the cathode.**

Examples 4A and 4B demonstrate the possibility of building an air breathing fuel cell by using soil matrix catalysts at anode and cathode.

In this example, the anode made with sterilized soil was able to convert chemical energy from a variety of biofuels such as glycerol, pyruvate and keto-glutarate into electricity. These fuels have high energy-storage densities (higher than lithium-ion batteries) and were completely oxidized by soil catalysts. At the cathode, soil catalysts efficiently reduced $O_2$ into $H_2O$ using the flux of H$^+$ generated by the anode. The very high stability of soil catalysts allows maintaining fuel oxidation and electricity production during at least hundred days. These findings demonstrate the possibility of building an air breathing fuel cell without using any rare metals as catalyst.

*Preparation of soil matrix.* The samples were from the 0-20 cm soil layer at the site of Theix (Massif Central, France). The soil is sandy loam Cambisol developed on granitic rock. The soil has the following characteristics: $pH_{water}$ = 6.5, carbon content = 39 g C kg$^{-1}$, clay = 26%, silt = 25%, sand = 49%. Fresh soil samples were mixed, sieved at 2 mm, dried to 5 % (w/w of water per dry soil) and irradiated with gamma rays at 45 kGy ($^{60}$Co, IONISOS, ISO14001, France).

*Anode preparation.* The anode consisted of 15 g of γ-irradiated-soil, 15 mL of electrolytes and a carbon paper collecting the electrons generated by oxidation reactions (see Figure 12). Four substrate treatments were tested: no substrate addition, glycerol, pyruvate and keto-glutarate. For the no substrate treatment, electrolytes contained 0.1 M potassium phosphate buffer (pH 7.5), 10 mM $MgCl_2$, 0.5 $MnCl_2$. For substrate treatment, 10 mM of glycerol, pyruvate or Keto-glutarate were added to 0.1 M potassium phosphate buffer (pH 7.5), 10 mM $MgCl_2$ and 0.5 $MnCl_2$. The glycerol, pyruvate and keto-glutarate were $^{13}$C labelled (delta [13]C = 2500 ‰). The $^{13}$C labelling enabled to separate the oxidation of soil organic C and added substrates.

*Cathode preparation.* The cathode consisted of 15 g of γ-irradiated-soil, 7 mL of electrolytes and a carbon paper transferring the electrons to soil catalysts (see Figure 12). Electrolytes were composed of 0.1 M potassium phosphate buffer (pH 7.5), 10 mM $MgCl_2$, 0.5 $MnCl_2$. The soil matrix was placed in contact of the proton exchange membrane (PEM, Nafion) in one side and the air from the other side. The soil matrix was protected from airborne microorganisms thanks to a polyvinylidene mesh of 0.2 $\mu$m pore size. The side in contact with air was saturated in $O_2$.

*Fuel cell assembling.* The anode and cathode were fixed into a polymethylmethacrylate (PMMA) tube of 5 cm diameter and 8 cm high. The anode was surmounted by a reservoir of 100 mL where gas released by oxidation reactions can accumulate as represented in Figure 12. The reservoir was also used to add electrolyte with fresh substrate when the substrate added at the beginning of the experiment was exhausted. The anode was separated from the reservoir with a polyvinylidene mesh of 0.2 $\mu$m pore size to maintain soil matrix in contact with the carbon paper and the proton exchange membrane (PEM). The mesh was also used to prevent soil matrix from microbial contamination during cell loading with fresh substrate. The reservoir was equipped of two valves in order to flush reservoir and anode with pure $N_2$ at the beginning of experiment and after each gas measurement. These flushes ensured the anoxic condition at the anode. The reservoir was also equipped of a septum to allow gas sampling. All components of fuel cell were sterilized and assembled under sterile conditions.

*Measurement of soil organic C and added substrate oxidation.* The total oxidation of soil organic C and added substrates were measured during periods of inactivity and activity of fuel cell. The measurement during cell inactivity allowed determining the stability of fuel cell in absence of any connection. The measurement during cell activity allowed determining efficiency of converting chemical energy in electricity. The total oxidation of soil organic C and added substrates corresponded to the accumulation of $CO_2$ in the cell reservoir. $CO_2$ accumulation was quantified by repeated measurements of $CO_2$ concentration by chromatography after sampling of gas reservoir. The oxidation of added $^{13}$C-labelled substrate was specifically quantified by following the production of $^{13}$C-labelled $CO_2$. The isotopic composition (delta $^{13}$C) was determined using a cavity ring down spectrometer analyzer coupled to a small injection system (Picarro 2131-i analyzer, Picarro Inc., Santa Clara, CA, USA).

*Electrochemical characterization of fuel cell.* All electrochemical tests were performed using a multi-potentiostat interfaced to a PC. These tests included power density, current density and open circuit potential, as well as charging and discharging profile output. The stability over time of the fuel cell was determined by conducting electrochemical tests after 10, 50 and 100 days of cell building. The potential of the anode and cathode were referenced to a saturated calomel electrode located within the anode and cathode compartments, respectively. Additional inputs of $^{13}$C-labelled substrates were performed when substrates were exhausted.

**Example 4B - Air breathing fuel cell using soil matrix catalysts at the anode and at the cathode.**

This example illustrates an alternative air breathing fuel cell by using soil matrix catalysts at the anode and the cathode.

*Materials and Methods*

*Preparation of soil matrix.* The samples were from the 0-20 cm soil layer at the site of Theix (Massif Central, France). The soil is sandy loam Cambisol developed on granitic rock. The soil has the following characteristics: $pH_{water}$ = 6.5, carbon content = 39 g C kg$^{-1}$, clay = 26%, silt = 25%, sand = 49%. Fresh soil samples were mixed, sieved at 2 mm, dried to 12 % (w/w of water per dry soil) and irradiated with gamma rays at 45 kGy ($^{60}$Co, IONISOS, ISO14001, France).

*Chemical and Regents.* Pyruvate sodium ($\geq$ 99 %), monopotassium phosphate, potassium phosphate dibasic were purchased from Sigma Aldrich (Saint Quentin Fallavier, France). Cloth carbon and titanium wire were purchased from good fellow (France). All the solutions were prepared in ultrapure water (resistivity less than 18 M$\Omega$ cm) obtained from a Millipore purification system.

*Soil fuel cell (SFC) construction.* SFC was assembled in bottle (250 ml bottle, corning Inc: 320 ml capacity) that could be sealed with gas-tight septa in order to follow the accumulation of $CO_2$ generated by respiration process. In order to build the anode, the following materials were deposited at the bottom of bottle: 50 g of irradiated soil, a piece of 28 cm$^2$ of carbon cloth that was used as collector of electrons, 150 g of irradiated soil. The carbon cloth was connected to a titanium wire that went out from the bottom of bottles trough a septum. A solution of 0.1M of phosphate buffer (150 ml, pH 7.2) was added as electrolyte. For the cathode, a piece of 28 cm$^2$ of carbon cloth was activated by dipping it into a mixture of irradiated soil and 0.1M of phosphate buffer (Soil/buffer ratio = 1/0.75) and sonicated during 40 mn. After sonication, the carbon cloth was dried at 60°C. The activated cathode was placed at the liquid-air interface in order to promote the reduction of $O_2$ in $H_2O$. The volume of air (20/80 $O_2$, $N_2$) available in the fuel cell was 91 ml. All materials were sterilized and assembled' under a laminar flow hood to maintain sterile conditions.

*Comparison of SFC with soil matrix at the two electrodes to SFC with platinum at the cathode.* To quantify the impact on fuel cell performances of substituting platinum by soil matrix catalysts at the cathode, the SFC made of 100% soil matrix catalysts was compared to a SFC using platinum planar at the cathode. The same procedure as previously described was applied to build the SFC except that platinum plate of 2 $cm^2$ was used placed at liquid-air interface to catalyse the reduction of $O_2$ to $H_2O$.

*Fuel cell measurements.*

The voltage (V) and current (I) of fuel cells were measured using a digital multimeter (UNI-T-DT830B). For the determination of the power output, a variable resistance (15 K$\Omega$- 30 $\Omega$) was used as an external load with a time interval of 5 min in each load, the current and cell potentials for each resistance were measured. Power (P) generated by fuel cell was calculated as a product of current passing through an external load and voltage drop across the resistor (P = I.V). The measurements were carried out under controlled temperature (22°C). Current and power densities were calculated by dividing the obtained current and power values by the surface area of electrodes (28.26 $cm^2$).

*Results and discussion*

The SFC made of 100% soil matrix catalysts presents a typical bell-shaped curve of power density as a function of current intensity (Figure 13). This result shows the possibility to construct a fuel cell without precious metals thanks to the use of soil catalysts. The fuel cell performances are reduced by substituting platinum with soil catalysts at the cathode. The OCV decreased from 443 $\pm$1 to 270.1 $\pm$1 mV while the maximal power density decreased from 45.7 to 20.36 mW $m^{-2}$ with the suppression of platinum at the cathode. Given that platinum is considered as one of the best catalyser for the reduction of $O_2$ to $H_2O$, the performance of soil matrix catalysers remain important. Moreover, nothing has been done for the moment to concentrate soil catalysts in the soil matrix and/or to stimulate the activity of those catalysts (addition of substrates...) signifying that the margins of progress remain considerable.

**Conclusions**

In Examples 3B and 4B, the possibility of using soil matrix catalysts to construct a breathing fuel cell producing electricity from the complete oxidation of organic C has been confirmed. These soil fuel cells (SFC) have better electric performances (OCV, power density, conversion efficiency) than benthic fuel cells (Table IV) because microorganisms divert a part of energy for their expenses reducing the energy available for the fuel cell. The power density of SFC remains lower than some enzymatic fuel cells (Table IV). However, nothing has been done for the moment to concentrate soil catalysts in the soil matrix and/or to stimulate the activity of those catalysts (addition of mediators...) signifying that the margins of progress remain considerable as confirmed by our assay of cell optimisation with addition of substrate. Moreover, SFC solves one of the most important issues for fuel cell development: their lifetime. Whereas most of enzymatic fuel cells lose their activity in hours following their construction the half-life of SFC can reach several years making it exploitable for many applications of everyday life. Our findings also show possibility to construct a fuel cell with irradiated soil without the use of any precious metal catalyst. Further research is required to improve the power density and storage of SFC and approach the performances of batteries currently commercialized (pe Lithium battery). Many research avenues in SFC optimization are promising: extraction and concentration of soil catalysts, separation of anode and cathode with proton exchange membrane, addition of co-factors and substrates...

*Table IV: comparison of the performances of different fuel cells*

| Anodic biocatalyst | Anode material | Cathode material | Power density (mA.m$^2$) | References |
|---|---|---|---|---|
| Irradiated soil | carbon cloth | Platinum | 97.71 | This work |
| S. platensis | Gold | Graphite | 10 | Lin et al, 2013 |
| S. platensis | platinum | Platinum | 6.5 | Fu et al, 2010 |
| Mixed microalgae | Graphite | Graphite | 0.004 | Venkata et al, 2013 |
| Mixed bacteria | Graphite | Graphite | 110 | Strik et al, 2008 |
| Activated sludge | Carbon fiber | Carbon Fiber | 7 | Lobato et al, 2013 |
| Mixed bacteria | Carbon paper | Platinum | 39 | Logan et al, 2005 |

(continued)

| Anodic biocatalyst | Anode material | Cathode material | Power density (mA.m²) | References |
|---|---|---|---|---|
| Enzyme GOx/Laccase | Carbon paper | Platinum | 1800 | Zhu et al, 2014 |
| Benthic microbial | Stainless steel/ graphite | Stainless steel/ zinc | 20 | Dumas et al, 2007 |

*References*

Bockris, J.O'M., Srinivasan S. Fuel Cells: Fundamentals and Applications 1969. New York, NY: McGraw-Hill Book Corporation.
Dumas, C., Mollica, A., Feron, D., Dasseguy, R., Etchevery, L., Bergel, A. 2007. Electrochimica Acta 53, 468-473.
Fu, C.-C., Hung, T.-C., Wu, W.-T., Wen, T.-C., Su, C.-H. 2010. Biochem Eng J 52, 175-80.
Kéraval, B., Colombet, J., Amblard, C., Alvarez, G., Fontaine, S. 2016. Biogeosciences 13, 6353-6362.
Lin, C.-C., Wei, C.-H., Chen, C.-I., Shieh, C.-J., Liu, Y.-C. 2013. Bioresour Technol 135, 640-643.
Lobato, J., Gonzalez del Campo, A., Fernández, F.J., Cañizares, P., Rodrigo, M.A. 2013. Appl Energy 110, 220-226.
Logan, B.E., Murano, C., Scott, K., Gray, N.D, Head, I.M. 2005. Water res 39: 942-952. Maire, V., Alvarez G., Colombet, J., Comby, A., Despinasses, R., Dubreucq, E., Joly, M., Lehrours, A.-C., Perrier, V., Shahzad, T., Fontaine, S. 2013, Biogeosciences 10, 1155-1167.
Menicucci, J., Beyenal, H., Marsili, E., Veluchamy, R. A., Demir, G., and Lewandowski, Z. 2006. Environ. Sci. Technol 40, 1062-1068.
Strik, D., Terlouw, H., Hamelers, H., Buisman, C. 2008. Appl Microbiol Biotechnol 81, 659-68.
Venkata Subhash, G., Chandra, R., Venkata Mohan, S. 2013. Bioresour Technol 136, 644-653.
Zebad, A., Gondran, C., le Goff, A., Holzinger, K., Cinquin, P., Cosnier, S. 2011. Natur Commun 2 : 370.
Zhu, Z., Tam, T.K, Sun, F., You, C. Y.-H., Percival Zhang, Y-H. 2014. Natur Commun 5 : 3026.

**Example 5 - Air breathing fuel cell with an anode bio-enhanced by the transfer of cell extract to soil matrix.**

This example shows the possibility of enhancing the power of the air breathing fuel cell by transferring yeast extract in soil matrix. The supply of yeast extract in soil matrix significantly increased the catalytic power of the anode. Consequently, the current density and power density of the fuel cell were significantly increased. This stimulating effect of yeast extract was maintained during hundreds of days.

*Production of cell-free yeast-extract. Pichia pastoris* cells were cultured at 28°C in a 1.5 L capacity Applikon bioreactor containing synthetic medium. This medium contained 80 $\mu$g L$^{-1}$ D-biotin, 40g L$^{-1}$ glycerol and a mixture of micro and macronutrients. pH of the medium was regulated at 5 using a $NH_4OH$ solution (15%, v/v) that also served as a nitrogen source. Dissolved $O_2$ was measured using a polarographic probe and was maintained at over 30% saturation by stirring up to 1800 rpm and aeration (an injection of 1 L of air per liter of medium per minute). The yeast culture was harvested at the end of the growth phase by centrifugation at 5000 x g for 10 min at 5°C to yield a hard pellet. To remove the culture media, the sediment was washed and re-decanted three times in 0.1 M potassium phosphate buffer (pH 7.5). The sediment was re-suspended in a small volume of potassium phosphate buffer (Vyeast/Vbuffer = 2/1) before cells were disrupted with a French pressure cell press (100 MPa). Unbroken cells and large cell debris were removed from the yeast extract by centrifugation at 25000 x g and 5°C. The yeast extract was filtered under sterile conditions at 0.2 $\mu$m to obtain a cell-free extract. The cell-free yeast extract was immediately incorporated into water and soil matrix microcosms under sterile conditions.

*Preparation of soil matrix.* The samples were from the 0-20 cm soil layer at the site of Theix (Massif Central, France). The soil is sandy loam Cambisol developed on granitic rock. The soil has the following characteristics: $pH_{water}$ = 6.5, carbon content = 39 g C kg$^{-1}$, clay = 26%, silt = 25%, sand = 49%. Fresh soil samples were mixed, sieved at 2 mm, dried to 5% (w/w of water per dry soil) and irradiated with gamma rays at 45 kGy ($^{60}$Co, IONISOS, ISO14001, France).

*Anode preparation.* The anode consisted of 15 g of $\gamma$-irradiated-soil, 15 mL of electrolytes and a carbon paper collecting the electrons generated by oxidation reactions (see Figure 12). The electrolytes were composed of 15 mL of yeast extract with 10 mM pyruvate, 10 mM $MgCl_2$ and 0.5 $MnCl_2$. The pyruvate was $^{13}$C labelled (delta $^{13}$C = 2500 ‰). The $^{13}$C labelling enabled to separate the oxidation of soil organic C and added substrates. *Cathode preparation.* The cathode was platinum gauze (20 cm²), electrodeposited with platinum-black. The catholyte (0.1 M potassium phosphate buffer (pH 7.5)) was continuously saturated with $O_2$.

*Fuel cell assembling.* The anode and the cathode were fixed into a polymethylmethacrylate (PMMA) tube of 5 cm diameter and 8 cm high. The anode was surmounted by a reservoir of 100 mL where gas released by oxidation reactions can accumulate (see Figure 12). The reservoir was also used to add electrolyte with fresh substrate when the substrate added at the beginning of the experiment was exhausted. The anode was separated from the reservoir with a polyvinylidene mesh of 0.2 $\mu$m pore size to maintain soil matrix in contact with the carbon mesh and the proton exchange membrane (PEM). The mesh was also used to prevent soil matrix from microbial contamination during cell loading with fresh substrate. The reservoir was equipped of two valves in order to flush reservoir and anode with pure $N_2$ at the beginning of experiment and after each gas measurement. These flushes ensured the anoxic condition at the anode. The reservoir was also equipped of a septum to allow gas sampling. All components of fuel cell were sterilized and assembled under sterile conditions.

*Measurement of soil organic C and added substrate oxidation.* The total oxidation of soil organic C and added substrates were measured during periods of inactivity and activity of fuel cell. The measurement during cell inactivity allowed determining the stability of fuel cell in absence of any connection. The measurement during cell activity allowed determining efficiency of converting chemical energy in electricity. The total oxidation of soil organic C and added substrates corresponded to the accumulation of $CO_2$ in cell reservoir. The $CO_2$ accumulation was quantified by repeated measurement of $CO_2$ concentration by chromatography after sampling of gas reservoir. The oxidation of added $^{13}$C-labelled substrate was specifically quantified by following the production of $^{13}$C-labelled $CO_2$. The isotopic composition (delta $^{13}$C) was determined using a cavity ring down spectrometer analyzer coupled to a small injection system (Picarro 2131-i analyzer, Picarro Inc., Santa Clara, CA, USA).

*Electrochemical characterization of fuel cell.* All electrochemical tests were performed using a multi-potentiostat interfaced to a PC. These tests included power density, current density and open circuit potential, as well as charging and discharging profile output. The stability over time of the fuel cell was determined by conducting electrochemical tests after 10, 50 and 100 days of cell building. Additional inputs of $^{13}$C-labelled substrates were performed when substrates were exhausted.

## Example 6 - Bioreactor allowing electrochemical synthesis of organic molecules with soil matrix as catalyser.

This example shows the possibility of synthesis of organic molecules from $CO_2$ and $H_2O$ using the energy provided by an electric current. The anode and the cathode were made with soil matrix and were saturated with $H_2O$ and $CO_2$, respectively. The $CO_2$ was labelled with [13]C. Application of a potential of -0,4V induced the release of $O_2$ at the anode indicating water electrolysis. The water electrolysis at the anode was paralleled to formation of $^{13}$C-labelled organic compounds and hydrogen at the cathode. These compounds could be isolated using soil extraction with water. Production of $O_2$, $H_2$ and $^{13}$C-labelled organic compounds was not detectable without connection of anode and cathode to electricity. These findings demonstrated the possibility of synthetizing organic molecules from $O_2$ and $H_2O$ using electricity as source of energy.

*Preparation of soil matrix.* The samples were from the 0-20 cm soil layer at the site of Theix (Massif Central, France). The soil is sandy loam Cambisol developed on granitic rock. The soil has the following characteristics: $pH_{water}$ = 6.5, carbon content = 39 g C kg$^{-1}$, clay = 26%, silt = 25%, sand = 49%. Fresh soil samples were mixed, sieved at 2 mm, dried to 5 % (w/w of water per dry soil) and irradiated with gamma ray at 45 kGy ($^{60}$Co, IONISOS, ISO14001, France).

*Anode preparation.* The anode consisted of 15 g of $\gamma$-irradiated-soil, 15 mL of electrolytes and a carbon paper collecting the electrons from the oxidation of $H_2O$ into $O_2$ (see Figure 14). Electrolytes contained 0.1 M potassium phosphate buffer (pH 7.5), 10 mM $MgCl_2$ and 0.5 $MnCl_2$. The anode was connected to a reservoir (100 mL) filled with pure $N_2$.

Cathode preparation. The cathode consisted of 15 g of $\gamma$-irradiated-soil, 15 mL of electrolytes and a carbon paper distributing the electrons into the soil matrix (see Figure 14). Electrolytes contained 0.1 M potassium phosphate buffer (pH 7.5), 10 mM $MgCl_2$ and 0.5 $MnCl_2$. The cathode was connected to a reservoir (100 mL) filled with pure $CO_2$. The $CO_2$ was $^{13}$C labelled ($^{13}$C abundance = 99%) in order to trace the formation of small $^{13}$C-labelled organic C compounds in soil matrix.

*Electrode assembling.* The anode and cathode were fixed into a Polymethylmethacrylate (PMMA) tube of 5 cm diameter and 12 cm high (see Figure 14). The anode and cathode were separated with a proton exchange membrane (Nafion). The reservoirs connected to anode and cathode were equipped of septum enabling gas sampling. The reservoirs were also equipped of valves in order to regularly flush the anode and cathode with $N_2$ and $CO_2$, respectively.

*Production of $O_2$, $H_2$ and small $^{13}$C-labelled organic compounds.* A potential of -0,4V was applied between the anode and cathode to generate the electro-catalyses (see Figure 14). The potential applied with a potentiostat was maintained during three weeks. The current density uptake and electrons consumed by the electrochemical system were quantified with the potentiostat and expressed per unit of cathode area. The production of $O_2$ at the anode was quantified by measuring the pressure and the $O_2$ concentration in the reservoir connected to the anode. The production

of $H_2$ at the cathode was quantified by measuring the pressure and the $H_2$ concentration in the reservoir connected to the anode. Concentration of $O_2$ and $H_2$ was measured by chromatography. The total amount of $^{13}$C-labelled compounds produced at the cathode was quantified by sampling 3 mL of cathode solution (mix of water & soil matrix). The solution was freeze dried before to be analyzed with an elemental analyzer coupled to an Isotop Ratio Mass Spectrometer. The soluble fraction of $^{13}$C-labelled organic compounds produced at the cathode was quantified after extraction of 3 mL of cathode solution with 3 mL of water and filtration at 0.45 $\mu$m. Samples were then examined by a TOC-meter coupled to an Isotop Ratio Mass Spectrometer in order to quantity the amount and delta $^{13}$C of soluble compounds. Samples were also analyzed by ultra-high-performance liquid chromatograph (HPLC) in order to determine the chemical composition of soluble compounds. To analyze for volatile fatty acids (VFAs), 1 mL of cathode solution was filtered through a 0,45 $\mu$m pore size filter and 50 $\mu$L of formic acid (50% v/v) was added. Samples were then analyzed by a gas chromatograph.

**Claims**

1.  Biofuel cell composed of:

    - an anode comprising a biocatalytic complex composed of a sterilized soil and optionally an electrolyte, and a first conductive material partially entrapped into said sterilized soil; and
    - a cathode comprising a second conductive material in presence of $O_2$

    wherein soil matrix contains at least one of the two following properties:

    - the presence of organic or mineral catalyzers including enzymes stabilized on soil particles metallic species, minerals or other organo-mineral catalyzers; and/or
    - the presence of organic or mineral particles allowing the stabilization of at least two different catalyzers.

2.  Biofuel cell according to claim 1 wherein the conductive material of the cathode is partially entrapped in a second sterilized soil matrix comprising a second electrolyte.

3.  Use of a biocatalytic complex composed of:

    - a sterilized soil and optionally an electrolyte, and
    - a conductive material partially entrapped into said soil,

    as an electrode in a biofuel cell.

4.  Process of electricity generation using the biofuel cell according to claim 1 comprising the steps of preparing said biofuel cell and of collecting the generated electricity.

5.  Process according to claim 4, wherein said process comprises an additional step of introducing substrates and/or additives in the sterilized soil of the anode of said biofuel cell.

6.  Bioreactor for the electrochemical synthesis of organic molecules composed of:

    - an anode comprising a first biocatalytic complex composed of a first sterilized soil and optionally a first electrolyte in the presence of $H_2O$, and a first conductive material partially entrapped into said first sterilized soil;
    - a cathode comprising a second biocatalytic complex composed of a second sterilized soil and optionally a second electrolyte in presence of $CO_2$, and a second conductive material partially entrapped into said second sterilized soil;
    - an electric generator connected to said anode and cathode.

7.  Process of electrochemical synthesis of organic molecules using the bioreactor of claim 6 comprising the steps of:

    - introducing additives in the first/second sterilized soil of said bioreactor, and
    - recovering said synthesized organic molecules.

**Patentansprüche**

1. Biobrennstoffzelle gebildet aus:

   - einer Anode, umfassend einen biokatalytischen Komplex, der aus einem sterilisierten Boden und wahlweise einem Elektrolyten gebildet ist, und ein erstes leitfähiges Material, das teilweise in dem sterilisierten Boden eingeschlossen ist; und
   - einer Kathode, die ein zweites leitfähiges Material in Gegenwart von $O_2$ umfasst,

   wobei die Bodenmatrix mindestens eine der zwei folgenden Eigenschaften enthält:

   - die Gegenwart von organischen oder mineralischen Katalysatoren, einschließlich Enzymen, die auf Bodenpartikeln stabilisiert sind, metallischen Spezies, Mineralien oder anderen organisch-mineralischen Katalysatoren; und/oder
   - die Gegenwart von organischen oder mineralischen Partikeln, die die Stabilisierung von mindestens zwei verschiedenen Katalysatoren ermöglichen.

2. Biobrennstoffzelle nach Anspruch 1, wobei das leitfähige Material der Kathode teilweise in einer zweiten sterilisierten Bodenmatrix eingeschlossen ist, die einen zweiten Elektrolyten umfasst.

3. Verwendung eines biokatalytischen Komplexes gebildet aus:

   - einem sterilisierten Boden und wahlweise einem Elektrolyten, und
   - einem leitfähigen Material, das teilweise in dem Boden eingeschlossen ist,

   als eine Elektrode in einer Biobrennstoffzelle.

4. Prozess zur Stromerzeugung unter Verwendung der Biobrennstoffzelle nach Anspruch 1, umfassend die Schritte eines Vorbereitens der Biobrennstoffzelle und eines Sammelns des erzeugten Stroms.

5. Prozess nach Anspruch 4, wobei der Prozess einen zusätzlichen Schritt eines Einführens von Substraten und/oder Additiven in den sterilisierten Boden der Anode der Biobrennstoffzelle umfasst.

6. Bioreaktor für die elektrochemische Synthese organischer Moleküle gebildet aus:

   - einer Anode, umfassend einen ersten biokatalytischen Komplex, der aus einem ersten sterilisierten Boden und wahlweise einem ersten Elektrolyten in der Gegenwart von $H_2O$ gebildet ist, und ein erstes leitfähiges Material, das teilweise in dem ersten sterilisierten Boden eingeschlossen ist;
   - einer Kathode, umfassend einen zweiten biokatalytischen Komplex, der aus einem zweiten sterilisierten Boden und wahlweise einem zweiten Elektrolyten in Gegenwart von $CO_2$ gebildet ist, und ein zweites leitfähiges Material, das teilweise in dem zweiten sterilisierten Boden eingeschlossen ist;
   - einem elektrischen Generator, der mit der Anode und Kathode verbunden ist.

7. Verfahren zur elektrochemischen Synthese organischer Moleküle unter Verwendung des Bioreaktors nach Anspruch 6, umfassend die Schritte eines:

   - Einführens von Additiven in den ersten/zweiten sterilisierten Boden des Bioreaktors, und
   - Rückgewinnens der synthetisierten organischen Moleküle.

**Revendications**

1. Pile à biocombustible composée de :

   - une anode comprenant un complexe biocatalytique composé d'un sol stérilisé et éventuellement un électrolyte, et un premier matériau conducteur partiellement emprisonné dans ledit sol stérilisé ; et
   - une cathode comprenant un second matériau conducteur en présence d'$O_2$

dans laquelle une matrice de sol contient au moins l'une des deux propriétés suivantes :

- la présence de catalyseurs organiques ou minéraux incluant des enzymes stabilisées sur des particules de sol, des espèces métalliques, des minéraux ou d'autres catalyseurs organo-minéraux ; et/ou
- la présence de particules organiques ou minérales permettant la stabilisation d'au moins deux catalyseurs différents.

2. Pile à biocombustible selon la revendication 1 dans laquelle le matériau conducteur de la cathode est partiellement emprisonné dans une seconde matrice de sol stérilisé comprenant un second électrolyte.

3. Utilisation d'un complexe biocatalytique composé de :

- un sol stérilisé et éventuellement un électrolyte, et
- un matériau conducteur partiellement emprisonné dans ledit sol,

en tant qu'électrode dans une pile à biocombustible.

4. Processus de génération d'électricité utilisant la pile à biocombustible selon la revendication 1 comprenant les étapes de préparation de ladite pile à biocombustible et de collecte de l'électricité générée.

5. Processus selon la revendication 4, dans lequel ledit processus comprend une étape supplémentaire d'introduction de substrats et/ou d'additifs dans le sol stérilisé de l'anode de ladite pile à biocombustible.

6. Bioréacteur pour la synthèse électrochimique de molécules organiques composé de :

- une anode comprenant un premier complexe biocatalytique composé d'un premier sol stérilisé et éventuellement un premier électrolyte en présence de $H_2O$, et un premier matériau conducteur partiellement emprisonné dans ledit premier sol stérilisé ;
- une cathode comprenant un second complexe biocatalytique composé d'un second sol stérilisé et éventuellement un second électrolyte en présence de $CO_2$, et un second matériau conducteur partiellement emprisonné dans ledit second sol stérilisé ;
- un générateur électrique connecté auxdites anode et cathode.

7. Processus de synthèse électrochimique de molécules organiques à l'aide du bioréacteur selon la revendication 6 comprenant les étapes de :

- introduction d'additifs dans le premier/second sol stérilisé dudit bioréacteur, et
- récupération desdites molécules organiques synthétisées.

Figure 1

Figure 2

Figure 3

Figure 4

Figure 5

Figure 6

**Figure 7**

**Figure 8**

**Figure 9**

**Figure 10**

**Figure 11**

**Figure 12**

**Figure 13**

**Figure 14**

# REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **MAIRE et al.** *Biogeosciences,* 2013, vol. 10, 1155-1167
- **JENNY, H.** Factors of soil formation: a system of quantitative pedology. McGraw-Hill, 1941
- Le sol: propriétés et fonctions. **CALVET, R.** Constitution, structure et phénomènes aux interfaces. 2003
- Soil formation, composition and basic concepts. **WESLEY, L.D.** Fundamentals of soil mechanics for sedimentary and residual soils. John Wiley & Sons, Inc, 2009
- **METSON, A.J.** Methods of chemical analysis for soil survey samples. *NZ Soil Bur Bull n°12,* 1956
- **VANCE et al.** *Soil Biology and Biochemistry,* 1987, vol. 19, 703-707
- **DANOVARO et al.** *Applied Environmental Microbiology,* 2001, vol. 67, 1384-1387
- **MCNAMARA et al.** *Applied Soil Ecology,* 2003, vol. 24, 117-132
- **BOCKRIS, J.O'M. ; SRINIVASAN S.** Fuel Cells: Fundamentals and Applications. McGraw-Hill Book Corporation, 1969
- **DUMAS, C. ; MOLLICA, A. ; FERON, D. ; DASSEGUY, R. ; ETCHEVERY, L. ; BERGEL, A.** *Electrochimica Acta,* 2007, vol. 53, 468-473
- **FU, C.-C. ; HUNG, T.-C. ; WU, W.-T. ; WEN, T.-C. ; SU, C.-H.** *Biochem Eng J,* 2010, vol. 52, 175-80
- **KÉRAVAL, B. ; COLOMBET, J. ; AMBLARD, C. ; ALVAREZ, G. ; FONTAINE, S.** *Biogeosciences,* 2016, vol. 13, 6353-6362
- **LIN, C.-C. ; WEI, C.-H. ; CHEN, C.-I. ; SHIEH, C.-J. ; LIU, Y.-C.** *Bioresour Technol,* 2013, vol. 135, 640-643
- **LOBATO, J. ; GONZALEZ DEL CAMPO, A. ; FERNÁNDEZ, F.J. ; CAÑIZARES, P. ; RODRIGO, M.A.** *Appl Energy,* 2013, vol. 110, 220-226
- **LOGAN, B.E. ; MURANO, C. ; SCOTT, K. ; GRAY, N.D ; HEAD, I.M.** *Water res,* 2005, vol. 39, 942-952
- **MAIRE, V. ; ALVAREZ G. ; COLOMBET, J. ; COMBY, A. ; DESPINASSES, R. ; DUBREUCQ, E. ; JOLY, M. ; LEHROURS, A.-C. ; PERRIER, V. ; SHAHZAD, T.** *Biogeosciences,* 2013, vol. 10, 1155-1167
- **MENICUCCI, J. ; BEYENAL, H. ; MARSILI, E. ; VELUCHAMY, R. A. ; DEMIR, G. ; LEWANDOWSKI, Z.** *Environ. Sci. Technol,* 2006, vol. 40, 1062-1068
- **STRIK, D. ; TERLOUW, H. ; HAMELERS, H. ; BUISMAN, C.** *Appl Microbiol Biotechnol,* 2008, vol. 81, 659-68
- **VENKATA SUBHASH, G. ; CHANDRA, R. ; VENKATA MOHAN, S.** *Bioresour Technol,* 2013, vol. 136, 644-653
- **ZEBAD, A. ; GONDRAN, C. ; LE GOFF, A. ; HOLZINGER, K. ; CINQUIN, P. ; COSNIER, S.** *Natur Commun,* 2011, vol. 2, 370
- **ZHU, Z. ; TAM, T.K ; SUN, F. ; YOU, C. Y.-H. ; PERCIVAL ZHANG, Y-H.** *Natur Commun,* 2014, vol. 5, 3026